# EUROPEAN PATENT SPECIFICATION

(11) **EP 2 528 401 B1**
(45) Date of publication and mention of the grant of the patent: **17.04.2019**
(21) Application number: 11844013.0
(22) Date of filing: 29.09.2011
(51) Int. Cl.: H04W 74/08, H04W 72/08

(54) **METHOD, SYSTEM AND DEVICE FOR DETERMINING PRIORITY OF COMPONENT CARRIER**
VERFAHREN, SYSTEM UND VORRICHTUNG ZUR FESTLEGUNG DER PRIORITÄT VON KOMPONENTENTRÄGERN
PROCÉDÉ, SYSTÈME ET DISPOSITIF POUR DÉTERMINER LA PRIORITÉ D'UNE COMPOSANTE PORTEUSE

(30) Priority: 15.02.2011 CN 201110038331
(43) Date of publication of application: 28.11.2012
(73) Proprietor: ZTE Corporation, Shenzhen, Guangdong 518057 (CN)
(72) Inventor: GOU, Wei, Shenzhen City, Guandong Province 518057 (CN); XIA, Shuqiang, Shenzhen City, Guandong Province 518057 (CN); LIN, Zhirong, Shenzhen City, Guandong Province 518057 (CN); MA, Zijiang, Shenzhen City, Guandong Province 518057 (CN)
(74) Representative: AWA Sweden AB
(86) International application number: PCT/CN2011/080355
(87) International publication number: WO 2012/109904

(56) References cited:
- WO-A1-2011/016195
- CN-A- 101 615 984
- CN-A- 101 801 103
- CN-A- 101 945 428
- US-A1- 2010 302 964
- SAMSUNG: "Periodic CQI/PMI/RI reporting priority for identical reporting modes/types from multiple serving cells", 3GPP DRAFT; R2-110879-PERIODIC_CQI_REPORT_PRIORITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Taipei, Taiwan; 20110221, 14 February 2011 (2011-02-14), XP050493456, [retrieved on 2011-02-14]
- MOTOROLA MOBILITY: "Periodic CQI/PMI/RI reporting for CA", 3GPP DRAFT; R1-110296_PUCCH_FOR_CA_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dublin, Ireland; 20110117, 13 January 2011 (2011-01-13), XP050490373, [retrieved on 2011-01-13]

## Description

### Technical Field

The present invention relates to a multi-carrier system in the technical field of wireless communication, and particularly, to a method, system and device for determining the priority of a component carrier and is suitable for the application scenario of selecting a carrier from a plurality of carriers for data transmission.

### Background of the Related Art

The 3GPP LTE-Advanced (abbreviated as LTE-A) system is an evolved version of the 3GPP long term evolution (abbreviated as LTE) system, and its object is to meet higher requirements and more applications on the wireless communication market in the future years, meet and exceed the requirements of International Mobile Telecommunications- Advanced (abbreviated as IMT-Advanced), and at the same also keeps better backward compatibility with LTE.

In order to meet this requirement, the LTE-A employs the carrier aggregation technology to further support communication bandwidth wider than that used in LTE, and the main principle of the carrier aggregation is that a maximum of 100 MHz bandwidth can be supported by way of aggregating carriers which are backward compatible with LTE. In order to keep backward compatibility with the LTE system, a plurality of carriers in the carrier aggregation have independent transmission encoding modules, and each module corresponds to a carrier.

In the LTE technology, the design of the feedback manner of periodic channel quality indicator (abbreviated as CQI)/pre-coding matrix indicator (abbreviated as PMI)/rank indicator (abbreviated as RI) is only for the condition when one downlink carrier is paired with one uplink carrier, and by way of periodically feeding back the CQI/PMI/RI value of the downlink carrier on the physical uplink channel, the network control unit can periodically learn the channel environment of the downlink carrier. However, since there are a plurality of downlink carriers in the LTE-A system equipped with the carrier aggregation technology, and each downlink carrier independently corresponds to a transmission block, the user equipment (abbreviated as UE), also referred to as terminal, has to feed back a plurality of periodic CQI/PMI/RI corresponding to different downlink carriers.

In the LTE-A system, the feedback period and feedback offset of the periodic CQI/PMI/RI of each downlink carrier are independently configured by the network control unit for different downlink carriers, therefore, the following situation may appear: the periodic CQI/PMI/RI corresponding to a plurality of different downlink carriers have to be fed back in the same uplink subframe simultaneously. In the LTE-A system, when the periodic CQI/PMI/RI of a plurality of downlink carriers have to be sent in the same uplink subframe, the priorities of the periodic CQI/PMI/RI for different downlink carriers are firstly judged according to the types of the CQI/PMI/RI information, for example, when CQI and RI have to be sent in the same uplink subframe simultaneously, since the priority of RI is higher, then RI will be sent in the subframe and CQI will not be sent, and if the types of the CQI/PMI/RI information are the same, then the priorities of each periodic CQI/PMI/RI are judged according to the priority of the downlink carrier to be fed back, and after the priority judgment of the downlink carrier, the UE only sends the periodic CQI/PMI/RI of the downlink carrier with the highest priority in one uplink subframe. How to determine the priority of the downlink carrier is a problem to be faced.

In the LTE-A system, when the UE has a PUSCH (Physical Uplink Shared Channel) in an uplink Pcell (Primary cell) or PCC (Primary Component Carrier) (in LTE-A, a component carrier corresponds to a cell, therefore, Pcell and PCC are described from two different angles but the meanings indicated thereby are the same, and the meanings of Scell and SCC are similar), and at this moment, the UE also has to feed back the uplink control information (abbreviated as UCI), then the UE sends the UCI on the PUSCH of Pcell in a multiplexed way, wherein UCI is periodic CQI/PMI/RI and/or Hybrid Automatic Repeat request-Acknowledgement (abbreviated as HARQ-ACK). If the UE does not have a PUSCH in the uplink Pcell while there are a plurality of PUSCH to be sent in the uplink Scell (Secondary cell) or SCC (Secondary Component Carrier), and at this moment, the UE also needs to feed back UCI, wherein the UCI is periodic or non-periodic CQI/PMI/RI, the UE will select one Scell and send the UCI on the PUSCH of this Scell. At this moment, the UE is facing the problem of selecting an Scell, and the UE has to judge the priority of the carrier and place the UCI on the PUSCH of the Scell with higher priority for sending.

In summary, in the LTE-A system, as to the feedback conflict problem of periodic CQI/PMI/RI of the downlink carrier, it requires to select the periodic CQI/PMI/RI of one downlink carrier therefrom for reporting, and it requires to select one carrier from Pcell and Scell or only from some Scells to report the periodic CQI/PMI/RI of this carrier. At this moment, if the carrier has a priority, then a carrier with the highest priority can be selected for reporting. At the same time, in the LTE-A system, with respect to the selection problem of uplink PUSCH in the uplink UCI feedback, it also requires to select a certain uplink carrier from Scell to transmit the UCI, and at this moment, if the uplink carrier also has a priority, then an uplink carrier with the highest priority can be selected for reporting. How to determine the priority of the carrier is a problem to be solved.

The document "SAMSUNG_Periodic CQI_PMI_RI reporting priority mode/types from multiple serving cells, XP050493456" discloses a proposed method to ensure the same understanding between the eNB and the UE to specify the cell-based priority rule, applicable only when the CQI/PMI/RI reports are of the same mode/type. One of the proposal is the CQI/PMI/RI reporting priorities among the serving cells when the reporting mode/types are the same are determined based on the serving cell indices, i.e. IE ServCellIndex; and reporting priority for a cell decreases as the corresponding serving cell index increases.

The document "Motorola Mobility _Periodic CQI_PMI_RI reporting for CA,_ XP050490373" discloses a method of collision handling for periodic CSI reporting when UE is configured for CA. Wherein this document discloses when the UE is configured PUSCH&PUCCH simultaneously and PUSCH is granted, A/N(ICC) on PUCCH uses format 1a/1b, and CSI(ICC) of prioritized CC multiplexed within PUSCH.

The document "US 2010/302964 A1" discloses a method for reporting carrier status in a user equipment (UE) of a wireless communication system. The wireless communication system supports carrier aggregation (CA) such that the UE is able to perform transmission or reception through multiple component carriers. This method includes steps of configuring a plurality of component carriers, receiving a signaling utilized for activating or deactivating the plurality of component carriers, and using a medium access control control element (MAC CE) to indicate the signaling is successfully received after the signaling is successfully received.

### Summary of the Invention

The technical problem to be solved by the present invention is to provide a method for determining the priority of a component carrier, so that when the periodic CQI/PMI/RI feedback conflicts with respect to the downlink carrier, the UE can rapidly select a downlink carrier.

In order to solve the above problem, the present invention provides methods according to claims 1 and 6 and a system according to claim 3. Further improvements and embodiments are provided in the dependent claims. The embodiments and/or examples of the following description which are not covered by the appended claims are considered as not being part of the present invention.

Also provided is a method for determining the priority of a component carrier, comprising: a network control unit and/or a terminal determining the priority of the component carrier according to carrier information about the component carrier.

The above method can further have the following features:
the carrier information comprises one or more of the following pieces of information: index information about the component carrier, configuration order of the component carrier in a control signaling, and frequency information about the component carrier.

The above method can further have the following features:
the index information is serving carrier index and/or secondary carrier index.

The above method can further have the following features:
the network control unit sending the carrier information about the component carrier to the terminal by way of a radio resource control message or a medium access control control element.

The above method can further have the following features:
when the carrier information includes the index information about the component carrier, the network control unit and/or the terminal determines the priority of the component carrier according to a sequence of index values of component carriers.

The above method can further have the following features:
the index value is a value of Scellindex-rlO and/or a value of ServCellIndex-r10.

The above method can further have the following features:
a rule based on which the priority of the component carrier is determined according to a sequence of index values of component carriers is as follows: the sequence of index values is in an ascending order, which corresponds to a sequence of priorities of component carriers from high to low, or the sequence of index values is in an descending order, which corresponds to a sequence of priorities of component carriers from high to low.

The above method can further have the following features:
determining the priority of the component carrier according to the index information about the component carrier comprises: if report modes or types of channel quality indicator (CQI), pre-coding matrix indicator (PMI), and rank indicator (RI) of a downlink component carrier reported by the terminal are the same, then the terminal selects the CQI, PMI or RI of the downlink component carrier with a smallest index value for reporting; or, when the terminal does not have a physical uplink shared channel (PUSCH) in an uplink main component carrier but has physical uplink shared channels in a plurality of uplink secondary component carriers, then the terminal selects the uplink component carrier with the smallest index value for reporting. The above method can further have the following features:
determining the priority of the component carrier according to the index information about the component carrier comprises: when a number of secondary component carriers configured for the terminal is greater than one, a priority order of the secondary component carriers is determined according to the sequence of the index values of the secondary component carriers configured for the terminal in a secondary component carrier add modify information element of a radio resource control (RRC) message.

The above method can further have the following features:
determining the priority of the component carrier according to the index information about the component carrier comprises: when a number of secondary component carriers configured for the terminal is greater than one, a priority order of the secondary component carriers is determined according to an order of the secondary component carriers configured for the terminal in a secondary component carrier add modify information element of a radio resource control (RRC) message.

The above method can further have the following features: determining the priority of the component carrier according to the index information about the component carrier comprises: the network control unit determines the priority order of activated secondary component carriers by the sequence of the index values of the activated secondary component carriers configured for the terminal in a medium access control control element (MAC CE) of an activate / deactivate message.

The above method can further have the following features:
a non-index value indication bit of the media access control control element (MAC CE) of the activate deactivate message is used to indicate to determine the priority according to the index information about the component carrier or determine the priority according to the configuration order of the component carrier in the control signaling; or, to indicate the sequence is in an ascending order, which corresponds to a sequence of priorities of component carriers from high to low, or the sequence is in an descending order, which corresponds to a sequence of priorities of component carriers from high to low. The above method can further have the following features:
the component carrier is a downlink component carrier or an uplink component carrier of the terminal, and determining the priority of the component carrier according to the carrier information about the component carrier comprises: determining the priority of the downlink component carrier according to the carrier information about the downlink component carrier, and determining the priority of the uplink component carrier according to the carrier information about the uplink component carrier.

The above method can further have the following features:
the component carrier is a secondary component carrier and/or primary component carrier configured for the terminal by the network control unit; or, the component carrier is a secondary component carrier in an activated state in the secondary component carriers and/or a primary component carrier configured for the terminal by the network control unit.

The above method can further have the following features:
when the component carrier comprises a primary component carrier and secondary component carriers, the priority of the primary component carrier is highest.

Also provided is a system for determining the priority of a component carrier, the system comprising: a network control unit and a terminal, wherein the network control unit and the terminal are configured to determine the priority of a component carrier according to the rank of the index value of the component carrier.

The above system can further have the following features:
the carrier information comprises one or more of the following pieces of information: index information about the component carrier, configuration order of the component carrier in the control signaling, and frequency information about the component carrier.

The above system can further have the following features:
the network control unit and the terminal are configured to: when the carrier information includes the index information about the component carrier, determine the priority of the component carrier according to a sequence of index values of component carriers.

The above system can further have the following features:
the network control unit and the terminal are configured to: when a number of secondary component carriers configured for the terminal by the network control unit is greater than one, determine the priority order of the secondary component carriers according to the order of the secondary component carrier configured for the terminal in a secondary component carrier add modify information element of a radio resource control (RRC) message or determine the priority order of the secondary component carrier according to the sequence of the index values of the secondary component carriers configured for the terminal in the secondary component carrier add modify information element of the radio resource control (RRC) message.

The above system can further have the following features:
the network control unit is configured to: determine the priority order of the activated secondary component carrier according to the sequence of the index values of the activated secondary component carriers configured for the terminal in the media access control control element (MAC CE) of the activate deactivate message, use a non-index value indication bit of the media access control control element (MAC CE) of the activate deactivate message to indicate that the sequence is in an ascending order, which corresponds to a sequence of priorities of component carriers from high to low, or the sequence is in an descending order, which corresponds to a sequence of priorities of component carriers from high to low.

The above system can further have the following features:
the network control unit is one or more of the following entities: a base station, a relay station, a cell coordination entity, a mobility management entity, and a gateway; and
the terminal is one of the following devices: a user equipment, a mobile phone, and a relay station.

Also provided is a method for indicating a component carrier, comprising: a network control unit indicating a component carrier with a highest priority for a terminal by way of a control signaling using carrier information about the component carrier.

The above method can further have the following features:
the network control unit achieves to indicate the component carrier with the highest priority for the terminal by way of indicating an identifier of the component carrier to the terminal.

The above method can further have the following features:
the control signaling is a radio resource control message or a medium access control control element.

The above method can further have the following features:
the identifier of the component carrier is a value of Scellindex-rlO and/or a value of ServCellIndex-r10 of the component carrier, or the carrier information is the frequency information about the component carrier.

Also provided is a method for reporting information, comprising: a terminal sending by way of an uplink signaling to a network control unit carrier information about a downlink component carrier corresponding to channel quality indicator (CQI), pre-coding matrix indicator (PMI) or rank indicator (RI).

The above method can further have the following features:
the downlink component carrier is a downlink carrier selected from a plurality of downlink carriers when the terminal needs to feed back the CQI, PMI or RI of the plurality of downlink carriers.

The above method can further have the following features:
the uplink signaling is a radio resource control message or a medium access control control element.

The above method can further have the following features:
the carrier information is a value of Scellindex-rlO and/or a value of ServCellIndex-r10 of the component carrier, or the carrier information is frequency information about the component carrier.

Also provided is a network control unit, comprising:
a priority determination module configured to: determine a priority of a component carrier according to carrier information about the component carrier.

The above network control unit can further have the following features:
an indication module configured to: indicate a component carrier with a highest priority for the terminal by way of a control signaling.

Also provided is a terminal, comprising:
a priority determination module configured to: determine a priority of a component carrier according to carrier information about the component carrier.

The above terminal can further have the following features:
a carrier information reporting module configured to: send by way of an uplink signaling to a network control unit the carrier information about the downlink component carrier corresponding to channel quality indicator (CQI), pre-coding matrix indicator (PMI) or rank indicator (RI).

The above solution can enable the UE to rapidly select a downlink carrier when the periodic CQI/PMI/RI feedback with respect to the downlink carrier conflict and do not require additional signaling or notify the UE only using the reserved bit or only by way of a little high layer signaling overhead, the implementation of which is convenient.

### Preferred Embodiments of the Present Invention

In the present invention, PCell and PCC are equivalent concepts, and Scell and SCC are equivalent concepts. Unless specifically stated, Scell and Pcell can be both uplink component carrier and downlink component carrier.

The application scenario of the embodiments of the present invention is: the network control unit configures a plurality of component carriers for the UE, the UE needs to report the CQI/PMI/RI of the downlink component carrier, if the report modes or types of the CQI/PMI/RI of the plurality of downlink component carriers are the same (i.e. in case of collision between CQI/PMI/RI reports of the plurality of downlink component carriers with reporting type of the same priority, the UE can not determine of which downlink component carrier the CQI/PMI/RI is to be reported) then the UE can only report one of them according to the provisions of the standards. In the above application scenario, method I of the embodiments of the present invention is: the UE determines the priority of the downlink component carrier according to the preset priority determination manner and reports the CQI/PMI/RI of the downlink component carrier with the highest priority; method II is: the network control unit designates the UE to report the CQI/PMI/RI of a certain downlink component carrier.

Another application scenario of the embodiments of the present invention is: the UE does not have a PUSCH in the uplink primary component carrier but have the PUSCH in a plurality of uplink secondary component carriers, and the UE needs to select one uplink secondary component carrier from the plurality of uplink secondary component carriers for reporting. In the above application scenario, method I of the embodiments of the present invention is: the UE determines the priority of the uplink secondary component carrier according to the preset priority determination manner and carry out uplink reporting on the uplink secondary component carrier with the highest priority. Method II is: the network control unit designates an uplink secondary component carrier for the UE.

The component carriers include two types, one is a secondary component carrier and/or primary component carrier configured for the terminal by the network control unit; and another is a secondary component carrier in an activated state in the secondary component carriers and/or a primary component carrier configured for the terminal by the network control unit. The component carrier is a downlink component carrier or an uplink component carrier of the terminal, the priority of the downlink component carrier is determined according to the carrier information about the downlink component carrier, and the priority of the uplink component carrier is determined according to the carrier information about the uplink component carrier.

Corresponding to method I, the method for determining the priority of a component carrier in the embodiment of the present invention includes: a network control unit and/or a terminal determines the priority of a component carrier according to the carrier information of the component carrier.

The carrier information comprises one or more of the following pieces of information: index information about the component carrier, configuration order of the component carrier in the control signaling (which control signaling is one sent by the network control unit to the terminal), and frequency information about the component carrier.

In this case, the index information is the serving carrier index (ServCellIndex-r10) and/or secondary carrier index (Scellindex-rlO), and it is to be noted that the secondary carrier index is also referred to as carrier index. The serving carrier index is used for identifying a serving cell (such as Pcell or Scell), and the secondary carrier index is used for identifying Scell.

The network control unit sends the carrier information about the component carrier to the terminal by way of a radio resource control (RRC) message or a medium access control control element (abbreviated as MAC CE).

A particular implementation is: when the carrier information includes the index information about the component carrier, the network control unit and/or the terminal determines the priority of the component carrier according to the sequence of the values of indexes (referred to as index values) of the component carriers (here, the component carriers refer to component carriers with the priorities thereof to be determined), and the network control unit and the terminal select a component carrier to solve the selection problem of the downlink component carrier and/or uplink component carrier mentioned above. The index value is the value of Scellindex-rlO and/or the value of ServCellIndex-r10.

The rule based on which the priority of the component carrier is determined according to a sequence of index values of component carriers is as follows: the sequence of index values is in an ascending order, which corresponds to a sequence of priorities of component carriers from high to low, or the sequence of index values is in an descending order, which corresponds to a sequence of priorities of component carriers from high to low.

For example, determining the priority of the component carrier according to the index information of the component carrier comprises: if report modes or types of channel quality indicator (CQI), pre-coding matrix indicator (PMI), and rank indicator (RI) of a downlink component carrier reported by the terminal are the same (i.e. in case of collision between CQI/PMI/RI reports of different downlink component carriers with reporting type of the same priority), for a given subframe, the terminal selects the CQI, PMI or RI of the downlink component carrier with a smallest index value for reporting; or, when the terminal does not have a physical uplink shared channel (PUSCH) in an uplink main component carrier but has physical uplink shared channels in a plurality of uplink secondary component carriers, then the terminal selects the uplink component carrier with the smallest index value for reporting.

Hereinafter, Pcell and Scell are used to represent component carriers for detailed description. In the embodiment of the present invention, the component carrier can be a Pcell or one or more Scells, and can also only includes Scells. When a Pcell or one or more Scells are included simultaneously, the index values of the Pcell and Scell are sequenced according to the above method and the priorities thereof are further determined, or it is determined that the priority of Pcell is the highest, and the priorities for the other Scells are determined according to the above method.

When the number of secondary component carriers configured for the terminal is greater than one, a priority order of the secondary component carriers is determined according to the sequence of the index values of the secondary component carriers configured for the terminal in a secondary component carrier add modify (SCellToAddMod-r10) information element of a radio resource control (RRC) message. For example, the priority of the secondary component carrier with small index value is higher than that of the secondary component carrier with big index value, or the priority of the secondary component carrier with big index value is higher than that of the secondary component carrier with small index value.

When the number of secondary component carriers configured for the terminal is greater than one, the priority order of the secondary component carriers is determined according to an order of the secondary component carriers configured for the terminal in a secondary component carrier add modify (SCellToAddMod-r10) information element of a radio resource control (RRC) message. For example, the priority of the secondary component carrier configured earlier is higher than that of the secondary component carrier configured later, or the priority of the secondary component carrier configured later is higher than that of the secondary component carrier configured earlier.

Alternatively, when the number of secondary component carriers configured for the terminal is greater than one, the network control unit also adds the priority of the configured Scell in the message which configures the add and modify parameter of Scell.

The above method can be applied to the priority sequencing of all the Scells (including activated and deactivated) of the UE and can also only be applied to the priority sequencing of the activated Scells of the UE, at this moment, the deactivated Scells are not included in the sequencing range, and it can also only be applied to the priority sequencing of the deactivated Scells of the UE, at this moment, the activated Scells are not included in the sequencing range.

Hereinafter, the application situation of a plurality of Scells will be described.

The network control unit determines the priority order of activated secondary component carriers by the sequence of the index values of the activated secondary component carriers configured for the terminal in a medium access control control element (MAC CE) of an activate deactivate message. For example, the order of the index values of the secondary component carriers from big to small corresponds to the order of the priorities from high to low, or, the order of the index values of the secondary component carriers from small to big corresponds to the order of the priorities from high to low.

The above indication manner is previously agreed between two parties and cannot be changed temporarily. In order to flexibly change among a plurality of manners for indicating the priority of Scell, the non-index value indication bit (this bit is a reserved bit of MAC CE) of the medium access control control element (MAC CE) of the activate deactivate message can be used for indication. MAC CE includes 8 bits: C7, C6, C5, C4, C3, C2, C1, and R. In this case, Ci indicates that the carrier at this location is activated, wherein the subscript i is the value of Scellindex. R is the non-index value indication bit.

This bit R can be used to indicate to determine the priority according to the index information about the component carrier or determine the priority according to the configuration order of the component carrier in the control signaling. For example, when this bit is set as 1 (or 0), it indicates to use the value size of Scellindex as priority, or, when this bit is set as 0 (or 1), it indicates to use the appearance order of Scellindex as priority.

This bit R can also be used to indicate the sequence is in an ascending order, which corresponds to a sequence of priorities of component carriers from high to low, or the sequence is in an descending order, which corresponds to a sequence of priorities of component carriers from high to low. For example, when the value of Scellindex is used as priority, when this bit is set 1, it indicates that the priority of the value of Scellindex increases successively from big to small, and when this bit is set as 0, it indicates that the priority of the value of Scellindex increases successively from small to big. The appearance order is similar when Scell is used, which need not be described here redundantly.

As to method II: the method for indicating a component carrier includes: a network control unit indicating a component carrier with a highest priority for a terminal by way of a control signaling using carrier information about the component carrier.

The network control unit achieves to indicate the component carrier with the highest priority for the terminal by way of indicating an identifier of the component carrier to the terminal.

The control signaling is a radio resource control message or a medium access control control element.

The identifier of the component carrier is a value of Scellindex-rlO and/or a value of ServCellIndex-r10 of the component carrier, or the carrier information is the frequency information about the component carrier.

In the present invention, the system for determining the priority of the component carrier includes a network control unit and a terminal. The network control unit is one or more of the following entities: a base station (eNB), a relay station (relay), a cell coordination entity (Multi-cell/multicast Coordination Entity, abbreviated as MCE), a mobility management entity (abbreviated as MME), and a gateway (GateWay); and the terminal is one of the following devices: a user equipment, a mobile phone, and a relay station.

Corresponding to the above method I, the network control unit and terminal in the above system are used for determining the priority of the component carrier according to the carrier information about the component carrier.

As to the above method II: the network control unit is used for indicating a component carrier with the highest priority for the terminal by way of a control signaling using the carrier information about the component carrier.

The particular functions of the network control unit and terminal in the present system are the same as those described in the above method, which need not be described here redundantly.

Hereinafter, embodiments will be taken for detailed description.

The Scell and Pcell in the following embodiments can be downlink component carrier or uplink component carrier. Unless specifically stated, the following embodiments only provide a method for how to select a component carrier, a component carrier is selected according to the priority so as to solve the selection problem of downlink component carrier when the UE needs to select the CQI/PMI/RI of one downlink component carrier from a plurality of downlink component carriers for reporting to the network control unit, or solve the problem that when there are PUSCHs in a plurality of uplink component carriers and the UE needs to select a component carrier from the plurality of uplink component carriers to report CQI/PMI/RI.

### Embodiment 1

Embodiment 1 mainly describes the manner that the network control unit and UE determines the priority of Scell in a pre-agreed manner, which manner does not require the network control unit to notify the UE using additional signaling.

The network control unit and UE make an agreement to determine the priority of Scell according to the configuration order of Scell in the control signaling (which control signaling is a signaling that the network control unit configures Scell for the UE). In particular, the network control unit and UE can make an agreement that the configuration order of Scell is from first to last, which corresponds to the sequence of the priority of Scell from high to low, or that the configuration order of Scell is from last to first, which corresponds to the sequence of the priority of Scell from high to low.

Alternatively, the network control unit and UE make an agreement to determine the priority of Scell according to the index value of Scell in the control signaling (which control signaling is a signaling that the network control unit configures Scell for the UE). In particular, the network control unit and UE can make an agreement that the sequence of the index value of Scell is from big to small, which corresponds to the sequence of the priority of Scell from high to low, or the sequence of the index value of Scell is from small to big, which corresponds to the sequence of the priority of Scell from high to low.

After having received the above control signaling, the UE can learn the priority of Scell, and when the UE needs to report or carry out other processing according to the priority of Scell, then processing can be carried out directly according to the priority of Scell.

In this embodiment, the Scell includes the following three situations: all the Scells, including activated and deactivated; only for the activated Scells; and only for the deactivated Scells. However, the priority in each situation can be determined according to the above method of this embodiment in these three cases. For example, for the priority of only those activated Scells, the above rule is still effective, and the difference only lies in that this rule is applied to the activated Scells of this UE and the deactivated Scells are excluded.

The UE can learn which Scells of its own are activated or deactivated according to the activated/deactivated MAC CE sent by the network control unit.

### Embodiment 2

Embodiment 1 mainly describes the determination manner for the priority of the activated Scells. The difference between embodiment 2 and embodiment 1 lies in that embodiment 2 only describes the determination of the priority of the activated Scells of the UE, and the manner being used is to determine the priority using the size of the index value of the activated Scell of the UE.

For example, both parties make an agreement that the priorities descend or ascend successively when the index values of Scells are from big to small, and in this embodiment, assuming that the smaller the index value, the higher the priority. Then, when the UE needs to select a carrier from a plurality of carriers, the UE selects a carrier with the smallest index value corresponding to its own activated carrier, since both parties has made an agreed rule, the network control unit knows clearly the configuration situation of the index of the activated carrier of the UE, when the UE needs to select a carrier, the network control unit can learn the carrier selected by the UE according to the same rule, and in this embodiment, the network control unit learns according to the same rule that the UE uses a carrier with the smallest index value in the activated carriers.

### Embodiment 3

Embodiment 3 describes the manner for the network control unit to indicate the priority determination principle to the UE.

In this embodiment, the reserved bit in the MAC CE of activate/deactivate is used to indicate which agreed manner or which particular principle is used to determine the priority of the carrier in particular.

The network control unit and UE make an agreement on the manner of determining the priority for the carrier, and it can divided into the following classes according to the present invention.

Class 1: when the network control unit configures carriers for the UE, the configuration is done by way of an RRC message, which includes the carrier information configured for this UE, wherein the network control unit will also configure an index for each carrier configured for this UE, then the priority of the carrier is determined according to the size of the index value, and there are particularly two principles: principle 1, the value of the index from big to small corresponds to the priority of the carrier from high to low, and principle 2, the value of the index from big to small corresponds to the priority of the carrier from low to high.

Class 2: when the network control unit configures carriers for the UE, the configuration is done by way of an RRC message, which includes the configuration order of the component carrier in the control signaling, then the priority of the carrier is determined according to the configuration order of the component carrier in the message, and there are particularly two principles: principle 1, the priority corresponding to the carrier configured earlier is the highest, and principle b, the priority corresponding to the carrier configured earlier is the lowest.

The network control unit will indicate the UE by way of an activated/deactivated MAC CE signaling which carriers of its own are activated, which are deactivated and the currently reserved bit in the MAC CE, and in this embodiment, this bit is used to indicate the particular principle of determining priority of the carriers in combination with the agreed manner. The network control unit and UE can make an agreement that when this bit is 1, it indicates principle 1 in class 1 or principle 2 in class 1, or principle a in class 1 or principle b in class 1.

### Embodiment 4

When it is determined that a Pcell and one or more Scells are included and that the priority needs to be determined, since Pcell is configured by the network control unit, the network control unit will also configure an index for Pcell. The index values of Pcell and Scell are sequenced together, and the priority is determined according to this sequence. Particular reference can be made to the above situation where the priority of the carrier is determined according to the size of the index value.

### Embodiment 5

When the UE encounters the situation that Pcell is also included in the carriers with the priorities thereof to be determined, then the UE can determine that the priority of Pcell is the highest, and the priorities of the following Scells are determined according to the above method.

As to method II: the method for indicating a component carrier in the present invention includes: a network control unit indicating a component carrier with a highest priority for a terminal by way of a control signaling using carrier information about the component carrier. The terminal reports the CQI/PMI/RI of this component carrier. The control signaling is a radio resource control message or a medium access control control element. The network control unit achieves to indicate the component carrier with the highest priority for the terminal by way of indicating an identifier of the component carrier to the terminal. The identifier of the component carrier is a value of Scellindex-rlO and/or a value of ServCellIndex-r10 of the component carrier, or the carrier information is the frequency information about the component carrier.

The above method for the network control unit to indicate a component carrier to the UE can reduce the steps for determining priority, when the UE has to select the CQI/PMI/RI of a component carrier from a plurality of downlink component carriers for reporting or the UE needs to select a uplink component carrier through which the CQI/PMI/RI is reported from a plurality of uplink component carriers, the UE can directly learn to report the CQI/PMI/RI of which downlink component carrier without priority judgment.

The network control unit configures a plurality of downlink or uplink component carriers for the UE, and hereinafter, the situations for downlink component carrier and uplink component carrier will be described in detail hereinafter.

As to the selection problem of downlink component carrier, the network control unit configures the CQI/PMI/RI feedback period or moment for each downlink component carrier for the UE, when the network control unit finds that the CQI/PMI/RI feedback moments of a plurality of downlink component carriers (including Pcell and/or Scell) of the UE conflict, then the network side sends the carrier information about the downlink component carrier to the UE through control signaling, so as to help the terminal to determine to report the CQI/PMI/RI of which downlink component carrier to the network control unit. For example, the network control unit sends the same to the UE by way of an RRC message or MAC CE using a control signaling and carries the carrier information about a downlink component carrier in this control signaling, and the downlink component carrier indicated by the carrier information is exactly one of the plurality of downlink component carriers when the CQI/PMI/RI feedback moments conflict, the UE only needs to feed back the CQI/PMI/RI of the component carrier indicated by this carrier information at the conflict moment to the network control unit. The carrier information here about the component carrier is the value of the Scellindex-rlO and/or the value of ServCellIndex-r10 of the component carrier, or the frequency information about the component carrier.

As to the selection problem of uplink component carrier, it is processed using a method similar to the above. The sending of the PUSCH of the uplink component carrier of the UE is scheduled and configured by the network control unit, when the network control unit finds that there are PUSCHs in a plurality of uplink secondary component carriers of the UE and there is no PUSCH in the uplink Pcell, then the network control unit designates an uplink secondary component carrier to send the CQI/PMI/RI report of the downlink component carrier of the UE for the UE through controlling signaling. For example, the network control unit sends the same to the UE by way of a control signaling RRC message or MAC CE, and carries the carrier information about an uplink component carrier in this control signaling, and the uplink component carrier indicated by this carrier information is exactly the uplink component carrier which sends the CQI/PMI/RI report of the downlink component carrier, and the UE only needs to send the CQI/PMI/RI report to the network control unit in the uplink component carrier indicated by this carrier information. The carrier information here about the component carrier is the value of the Scellindex-rlO and/or the value of ServCellIndex-r10 of the component carrier, or the frequency information about the component carrier.

The present invention also provides a method for reporting information, comprising: a terminal sending by way of an uplink signaling to a network control unit carrier information about a downlink component carrier corresponding to channel quality indicator, pre-coding matrix indicator or rank indicator.

The downlink component carrier is a downlink carrier selected from a plurality of downlink carriers when the terminal needs to feed back the CQI, PMI or RI of the plurality of downlink carriers.

The uplink signaling is a radio resource control message or a medium access control control element.

The carrier information is a value of Scellindex-rlO and/or a value of ServCellIndex-r10 of the component carrier, or the carrier information is frequency information about the component carrier.

Detailed description is as follows:
when the UE encounters the situation that the CQI/PMI/RI feedback period or moment of a plurality of downlink component carries (including Pcell and/or Scell) conflict (i.e. in case of collision between CQI/PMI/RI reports of the plurality of downlink component carriers with reporting type of the same priority), then the UE selects the CQI/PMI/RI of one downlink component carrier (the manner of random selection or the manner following a preset rule can be used) for reporting to the network control unit, and at the same time, the UE sends the carrier information about this component carrier to the network side control unit. The carrier information is in particular the value of the Scellindex-rlO and/or the value of ServCellIndex-r10 of the component carrier, or the frequency information about the component carrier. As such, after having received the CQI/PMI/RI report of the UE and the carrier information, the network control unit can learn the UE reports the CQI/PMI/RI report of which downlink component carrier.

It needs to note that the embodiments of the present application and the features in the embodiments can be combined with each other if there is no conflict.

Those skilled in the art shall understand that all of or part of the steps in the above methods can be completed by instructing relevant hardware by programs, and the programs can be stored in a computer readable storage medium, such as read only memory, magnetic disk, or optical disk, etc. Optionally, all of or part of the steps of the above embodiments can also be implemented using one or more integrated circuits. Accordingly, the respective module/unit in the above embodiments can be implemented by use of hardware or software function module. The present invention is not limited to any particular form of combination of hardware and software.

### Industrial Applicability

The above embodiments can enable the UE to rapidly select a downlink carrier when the periodic CQI/PMI/RI feedback with respect to the downlink carrier conflict and the UE can be notified with no need of additional signaling or only by using the reserved bit or only by way of a little high layer signaling overhead, the implementation of which is convenient.

## Claims

1. A method for determining a priority of a component carrier, **characterized by** comprising:
a network control unit and/or a terminal determining the priority of the component carrier according to a sequence of index values of component carriers;
wherein determining the priority of the component carrier according to the sequence of the index value of the component carrier comprises:
when the terminal does not have a physical uplink shared channel, PUSCH, in an uplink main component carrier but has physical uplink shared channels in a plurality of uplink secondary component carriers, then the terminal selects the uplink component carrier with the smallest index value for reporting channel quality indicator, CQI, pre-coding matrix indicator, PMI, or rank indicator, RI, of a downlink component carrier;
wherein the index value of the component carrier is a value of a serving carrier index and/or a secondary carrier index.

2. The method as claimed in claim 1, wherein,
determining the priority of the component carrier according to the sequence of the index value of the component carrier further comprises:
if report modes or types of CQI, PMI, or RI of downlink component carriers reported by the terminal are the same, then the terminal selects the CQI, PMI or RI of the downlink component carrier with a smallest index value to report.

3. A system for determining a priority of a component carrier, **characterized by** comprising:
a network control unit and a terminal; wherein
the network control unit and the terminal are configured to determine the priority of the component carrier according to a sequence of index values of component carriers;
wherein determining the priority of the component carrier according to the sequence of the index value of the component carrier comprises:
when the terminal does not have a physical uplink shared channel, PUSCH, in an uplink main component carrier but has physical uplink shared channels in a plurality of uplink secondary component carriers, then the terminal selects the uplink component carrier with the smallest index value for reporting channel quality indicator, CQI, pre-coding matrix indicator, PMI, or rank indicator, RI, of a downlink component carrier;
wherein the index value of the component carrier is a value of a serving carrier index and/or a secondary carrier index.

4. The system as claimed in claim 3, wherein
the network control unit is one or more of the following entities: a base station, a relay station, a multi-cell/multicast coordination entity, MCE, a mobility management entity, MME, and a gateway;
the terminal is one of the following devices: a user equipment, a mobile phone, and a relay station.

5. The system as claimed in claim 3, wherein
determining the priority of the component carrier according to the sequence of the index value of the component carrier further comprises:
if report modes or types of CQI, PMI, or RI of downlink component carriers reported by the terminal are the same, then the terminal selects the CQI, PMI or RI of the downlink component carrier with a smallest index value to report.

6. A method for indicating a component carrier, **characterized by** comprising:
a network control unit indicating a component carrier with a highest priority for a terminal by way of a control signaling carrying carrier information about the component carrier, when the terminal does not have a physical uplink shared channel, PUSCH, in an uplink main component carrier but has physical uplink shared channels in a plurality of uplink secondary component carriers;
the terminal reporting a channel quality indicator, CQI/ pre-coding matrix indicator, PMI / rank indicator, RI, of a component carrier through the indicated component carrier.

7. The method as claimed in claim 6, wherein
the carrier information about the component carrier is a value of Scellindex-r10 and/or a value of ServCellIndex-r10 of the component carrier, or the carrier information is the frequency information about the component carrier.

## Patentansprüche

1. Verfahren zum Bestimmen einer Priorität eines Komponententrägers, **dadurch gekennzeichnet, dass** es Folgendes umfasst:
eine Netzwerksteuereinheit und/oder ein Endgerät bestimmen die Priorität des Komponententrägers gemäß einer Sequenz von Indexwerten von Komponententrägern;
wobei das Bestimmen der Priorität des Komponententrägers gemäß der Sequenz des Indexwertes des Komponententrägers Folgendes umfasst:
wenn das Endgerät keinen Physical Uplink Shared Channel (PUSCH) in einem Uplink-Hauptkomponententräger hat, sondern Physical Uplink Shared Channels in mehreren sekundären Uplink-Komponententrägern hat, so wählt das Endgerät den Uplink-Komponententräger mit dem kleinsten Indexwert zum Berichten eines Kanalqualitätsindikators (CQI), eines Vorcodierungsmatrixindikators (PMI) oder eines Rangindikators (RI) eines Downlink-Komponententräger aus;
wobei der Indexwert des Komponententrägers ein Wert eines bedienenden Träger-Index und/oder eines sekundären Träger-Index ist.

2. Verfahren nach Anspruch 1, wobei
das Bestimmen der Priorität des Komponententrägers gemäß der Sequenz des Indexwertes des Komponententrägers des Weiteren Folgendes umfasst:
wenn Berichtsmodi oder Arten von CQI, PMI oder RI von Downlink-Komponententrägern, die durch das Endgerät berichtet wurden, die gleichen sind, so wählt das Endgerät den CQI, PMI oder RI des Downlink-Komponententrägers mit einem kleinsten Indexwert zum Berichten aus.

3. System zum Bestimmen einer Priorität eines Komponententrägers, **dadurch gekennzeichnet, dass** es Folgendes umfasst:
eine Netzwerksteuereinheit und ein Endgerät; wobei
die Netzwerksteuereinheit und das Endgerät dafür konfiguriert sind, die Priorität des Komponententrägers gemäß einer Sequenz von Indexwerten von Komponententrägern zu bestimmen;
wobei das Bestimmen der Priorität des Komponententrägers gemäß der Sequenz des Indexwertes des Komponententrägers Folgendes umfasst:
wenn das Endgerät keinen Physical Uplink Shared Channel (PUSCH) in einem Uplink-Hauptkomponententräger hat, sondern Physical Uplink Shared Channels in mehreren sekundären Uplink-Komponententrägern hat, so wählt das Endgerät den Uplink-Komponententräger mit dem kleinsten Indexwert zum Berichten eines Kanalqualitätsindikators (CQI), eines Vorcodierungsmatrixindikators (PMI) oder eines Rangindikators (RI) eines Downlink-Komponententräger aus;
wobei der Indexwert des Komponententrägers ein Wert eines bedienenden Träger-Index und/oder eines sekundären Träger-Index ist.

4. System nach Anspruch 3, wobei
die Netzwerksteuereinheit eine oder mehrere der folgenden Entitäten ist: eine Basisstation, einen Relaisstation, eine Multi-Cell/Multicast Coordination-Entität (MCE), eine Mobilitätsmanagement-Entität (MME), und ein Gateway;
das Endgerät eine der folgenden Vorrichtungen ist: eine Nutzerausrüstung, ein Mobiltelefon, und ein Relaisstation.

5. System nach Anspruch 3, wobei
das Bestimmen der Priorität des Komponententrägers gemäß der Sequenz des Indexwertes des Komponententrägers des Weiteren Folgendes umfasst:
wenn Berichtsmodi oder Arten von CQI, PMI oder RI von Downlink-Komponententrägern, die durch das Endgerät berichtet wurden, die gleichen sind, so wählt das Endgerät den CQI, PMI oder RI des Downlink-Komponententrägers mit einem kleinsten Indexwert zum Berichten aus.

6. Verfahren zum Anzeigen eines Komponententrägers, **dadurch gekennzeichnet, dass** es Folgendes umfasst:
eine Netzwerksteuereinheit zeigt einen Komponententräger mit einer höchsten Priorität für ein Endgerät mittels Steuerungszeichengabe an, die Träger-Informationen über den Komponententräger transportiert, wenn das Endgerät keinen Physical Uplink Shared Channel (PUSCH) in einem Uplink-Hauptkomponententräger hat, sondern Physical Uplink Shared Channels in mehreren sekundären Uplink-Komponententrägern hat,
das Endgerät berichtet einen Kanalqualitätsindikator (CQI), einen Vorcodierungsmatrixindikator (PMI) oder einen Rangindikators (RI) eines Downlink-Komponententräger durch den angezeigten Komponententräger.

7. Verfahren nach Anspruch 6, wobei
die Träger-Informationen über den Komponententräger ein Wert von Scellindex-r10 und/oder ein Wert von ServCelllndex-r10 des Komponententrägers sind oder die Träger-Informationen die Frequenzinformationen über den Komponententräger sind.

## Revendications

1. Procédé de détermination d'une priorité d'une porteuse composante, **caractérisé en ce qu'**il comprend :
par une unité de commande de réseau et/ou un terminal, la détermination de la priorité de la porteuse composante en fonction d'une séquence de valeurs d'indice de porteuses composantes ;
dans lequel la détermination de la priorité de la porteuse composante en fonction de la séquence de la valeur d'indice de la porteuse composante comprend :
lorsque le terminal n'a pas de canal partagé de liaison montante physique, PUSCH, dans une porteuse composante principale de liaison montante mais a des canaux partagés de liaison montante physiques dans une pluralité de porteuses composantes secondaires de liaison montante, le terminal sélectionne la porteuse composante de liaison montante avec la plus petite valeur d'indice pour rapporter un indicateur de qualité de canal, CQI, un indicateur de matrice de précodage, PMI, ou un indicateur de rang, RI, d'une porteuse composante de liaison descendante ;
dans lequel la valeur d'indice de la porteuse composante est une valeur d'un indice de porteuse de desserte et/ou d'un indice de porteuse secondaire.

2. Procédé selon la revendication 1, dans lequel
la détermination de la priorité de la porteuse composante en fonction de la séquence de la valeur d'indice de la porteuse composante comprend en outre :
si des modes de rapports ou des types de CQI, de PMI ou de RI de porteuses composantes de liaison descendante rapportées par le terminal sont identiques, le terminal sélectionne le CQI, le PMI ou le RI de la porteuse composante de liaison descendante avec la plus petite valeur d'indice à rapporter.

3. Système de détermination d'une priorité d'une porteuse composante, **caractérisé en ce qu'**il comprend :
une unité de commande de réseau et un terminal ; dans lequel
l'unité de commande de réseau et le terminal sont configurés pour effectuer la détermination de la priorité de la porteuse composante en fonction d'une séquence de valeurs d'indice de porteuses composantes ;
dans lequel la détermination de la priorité de la porteuse composante en fonction de la séquence de la valeur d'indice de la porteuse composante comprend :
lorsque le terminal n'a pas de canal partagé de liaison montante physique, PUSCH, dans une porteuse composante principale de liaison montante mais a des canaux partagés de liaison montante physiques dans une pluralité de porteuses composantes secondaires de liaison montante, le terminal sélectionne la porteuse composante de liaison montante avec la plus petite valeur d'indice pour rapporter un indicateur de qualité de canal, CQI, un indicateur de matrice de précodage, PMI, ou un indicateur de rang, RI, d'une porteuse composante de liaison descendante ;
dans lequel la valeur d'indice de la porteuse composante est une valeur d'un indice de porteuse de desserte et/ou d'un indice de porteuse secondaire.

4. Système selon la revendication 3, dans lequel
l'unité de commande de réseau est une ou plusieurs des entités suivantes : une station de base, une station de relais, une entité de coordination de cellules multiples/multidiffusion, MCE, une entité de gestion de mobilité, MME, et une passerelle ;
le terminal est l'un des dispositifs suivants : un équipement d'utilisateur, un téléphone mobile, et une station de relais.

5. Système selon la revendication 3, dans lequel
la détermination de la priorité de la porteuse composante en fonction de la séquence de la valeur d'indice de la porteuse composante comprend en outre :
si des modes de rapports ou des types de CQI, de PMI ou de RI de porteuses composantes de liaison descendante rapportées par le terminal sont identiques, le terminal sélectionne le CQI, le PMI ou le RI de la porteuse composante de liaison descendante avec la plus petite valeur d'indice à rapporter.

6. Procédé d'indication d'une porteuse composante, **caractérisé en ce qu'**il comprend :
par une unité de commande de réseau, l'indication d'une porteuse composante avec la plus grande priorité pour un terminal au moyen d'une signalisation de commande portant des informations de porteuse relatives à la porteuse composante, lorsque le terminal n'a pas de canal partagé de liaison montante physique, PUSCH, dans une porteuse composante principale de liaison montante mais a des canaux partagés de liaison montante physiques dans une pluralité de porteuses composantes secondaires de liaison montante ;
par le terminal, le rapport d'un indicateur de qualité de canal, CQI, d'un indicateur de matrice de précodage, PMI, ou d'un indicateur de rang, RI, d'une porteuse composante par l'intermédiaire de la porteuse composante indiquée.

7. Procédé selon la revendication 6, dans lequel
les informations de porteuse relatives à la porteuse composante sont une valeur de Scellindex-r10 et/ou une valeur de ServCelllndex-r10 de la porteuse composante, ou les informations de porteuse sont les informations de fréquence relatives à la porteuse composante.
